# EUROPEAN PATENT APPLICATION

(11) **EP 3 457 368 A1**
(43) Date of publication of application: **20.03.2019**
(21) Application number: 18190228.9
(22) Date of filing: 22.08.2018
(51) Int. Cl.: G07G 1/00, G07G 1/12, G06Q 20/20, G06Q 20/38

(54) **SETTLEMENT TERMINAL DEVICE AND CONTROL METHOD OF SETTLEMENT TERMINAL DEVICE**

(30) Priority: 24.08.2017 JP 2017161210
(71) Applicant: Toshiba TEC Kabushiki Kaisha, Tokyo 141-8562 (JP)
(72) Inventor: SHIMOIRISA, Shinichi, Shinagawa-ku,, Tokyo 141-8562 (JP)
(74) Representative: Takeuchi, Maya

(57) **Abstract**

In one embodiment, a settlement terminal device settles a total amount, based on a prescribed currency, of purchased articles of a customer. The settlement terminal device has a display and a controller. The controller acquires a total amount in which the total amount based on the prescribed currency is exchanged into each currency kind capable of performing settlement. The controller makes the display comparably display the acquired total amount. Further, the controller makes the display display a signature column on the same screen as a screen on which the acquired total amount is displayed.

## Description

### FIELD

Embodiments described herein relate generally to a settlement terminal device and a control method of a settlement terminal device.

### BACKGROUND

In retail stores which sell commodities stocked from producers and wholesalers to consumers (customers), there is a retail store in which a customer can pay a price of a commodity which the customer has purchased by credit. In addition, recently, there is also a retail store in which a customer can select a currency for a price which the customer pays by credit, out of a plurality of different currencies. That is, a so-called DCC (DCC: Dynamic Currency Conversion) service is provided. In a store of the retail store like this, a settlement terminal device which corresponds to DCC is provided.

In the settlement terminal device corresponding to DCC, a money amount charged from a credit company to the customer as a commodity purchase price is a money amount based on an exchange rate at a time point of purchasing the relevant commodity. Accordingly, the customer need not worry about fluctuation of the exchange rate after purchase, and can enjoy shopping casually at ease.

At the time of performing DCC, the customer has to correctly recognize the selected settlement contents (the selected currency kind and the payment amount denominated in the selected currency, and so on, for example) without error at the place in the moment. However, the conventional settlement terminal having the DCC function does not have a means for making the customer correctly recognize the settlement contents which the customer oneself has selected without error at the place in the moment.

### SUMMARY OF INVENTION

To solve the above-cited problems, there is provided a settlement terminal device to settle a total amount, based on a prescribed currency, of purchased articles of a customer, comprising:
a communication interface to input a currency kind capable of performing settlement of the total amount based on the prescribed currency;
a display to display information relating to the settlement and to accept an operation of the customer; and
a controller;
wherein the controller
acquires a total amount for each the currency kind in which the total amount based on the prescribed currency is exchanged into each the inputted currency kind capable of performing settlement,
makes the display comparably display the acquired total amount for each the currency kind, along with the inputted currency kind capable of performing settlement,
accepts selection of a currency kind for performing settlement by the customer, from the displayed currency kinds capable of performing settlement, via the display,
makes the display display a signature column for inputting a signature of the customer on the same screen as a screen on which the acquired total amount for each the currency kind, and accepts an input of the signature to the signature column by the customer via the display, and
performs settlement in the currency kind the selection of which has been accepted.

Preferably, the controller may make the display display the signature column at a position in accordance with the currency kind the selection of which has been accepted.

Preferably, the controller may make the display display the signature column at a position in the vicinity of a display position of the currency kind the selection of which has been accepted.

Preferably, the controller may perform settlement provided that an acceptance of the selection of the currency kind for performing the settlement, and an acceptance of the input of the signature by the customer have been both completed.

Preferably, the controller may determine whether the signature has been inputted into the signature column by the customer,
the controller determines that the input of the signature by the customer has been completed when the controller determines that the signature has been inputted, and
the controller accepts the input of the signature by the customer when the controller determines that the input of the signature has been completed.

Preferably, the controller may enable the input of the signature to the signature column by the customer, provided that the selection of the currency kind for performing settlement has been accepted.

Preferably, the controller may determine whether the signature has been inputted into the signature column by the customer,
the controller may determine whether the input of the signature by the customer has been completed, when the controller determines that the signature has been inputted in a state in which the selection of the currency kind for performing settlement has been accepted, and
the controller may notify the customer to perform the selection of the currency kind for performing settlement before the input of the signature, when the controller determines that the signature has been inputted in a state in which the selection of the currency kind for performing settlement has not been accepted.

Preferably the settlement terminal device may further comprise:
a printing device to issue a slip printed with transaction contents of the purchased articles;
wherein the controller makes the printing device issue the slip printed with the transaction contents, provided that the selection of the currency kind for performing settlement has been accepted, or the input of the signature by the customer has been accepted.

Preferably, the communication interface may input information of the customer including the currency kind capable of performing settlement;
the controller may determine whether settlement in a plurality of currency kinds including the prescribed currency is available, based on the inputted information of the customer; and
the controller may acquire a total amount for each the currency kind in which the total amount based on the prescribed currency is exchanged into each the currency kind capable of performing settlement included in the information of the customer, when the controller determines that the settlement by the plurality of the currency kinds is available.

In another exemplary embodiment, there is also provide a control method of a settlement terminal device which settles a total amount, based on a prescribed currency, of purchased articles of a customer, and has a communication interface to input a currency kind capable of performing settlement of the total amount and a display to display information relating to the settlement and to accept an operation of the customer, comprising:
acquiring a total amount for each the currency kind in which the total amount based on the prescribed currency is exchanged into each the inputted currency kind capable of performing settlement;
making the display comparably display the acquired total amount for each the currency kind, along with the inputted currency kind capable of performing settlement;
accepting selection of a currency kind for performing settlement by the customer, from the displayed currency kinds capable of performing settlement, via the display;
making the display display a signature column for inputting a signature of the customer on the same screen as a screen on which the acquired total amount for each the currency kind, and accepting an input of the signature to the signature column by the customer via the display; and
performing settlement in the currency kind the selection of which has been accepted.

Preferably the control method may further comprise:
making the display display the signature column at a position in accordance with the currency kind the selection of which has been accepted.

Preferably the control method may further comprise:
making the display display the signature column at a position in the vicinity of a display position of the currency kind the selection of which has been accepted.

Preferably the control method may further comprise:
performing settlement provided that an acceptance of the selection of the currency kind for performing the settlement, and an acceptance of the input of the signature by the customer have been both completed.

Preferably the control method may further comprise:
determining whether the signature has been inputted into the signature column by the customer,
determining that the input of the signature by the customer has been completed when the controller determines that the signature has been inputted, and
accepting the input of the signature by the customer when the controller determines that the input of the signature has been completed.

Preferably the control method may further comprise:
enabling the input of the signature to the signature column by the customer, provided that the selection of the currency kind for performing settlement has been accepted.

### BRIEF DESCRIPTION OF THE DRAWINGS

The above and other objects, features and advantages of the present invention will be made apparent from the following description of the preferred embodiments, given as nonlimiting examples, with reference to the accompanying drawings, in which:
Fig. 1 is a block diagram showing a schematic configuration of a settlement system according to a first embodiment.
Fig. 2 is a hardware block diagram showing a hardware configuration of the POS terminal included in the settlement system of Fig. 1.
Fig. 3 is a perspective view of an outer appearance of the settlement terminal included in the settlement system of Fig. 1.
Fig. 4 is a hardware block diagram showing a hardware configuration of the settlement terminal of Fig. 3.
Fig. 5 is a hardware block diagram showing a hardware configuration of the settlement server included in the settlement system of Fig. 1.
Fig. 6 is a functional block diagram showing a functional configuration of the settlement terminal of Fig. 3.
Fig. 7 is a diagram showing an example of a screen which the tablet terminal connected to the settlement terminal of Fig. 3 displays at the time of accepting selection of the currency kind.
Fig. 8 is a diagram showing an example of slips which the settlement terminal of Fig. 3 issues at the time of settlement completion.
Fig. 9 is a flow chart showing an example of a flow of a processing which the settlement system according to the first embodiment executes.
Fig. 10 is a diagram showing an example of a screen on which the tablet terminal connected to the settlement terminal according to a second embodiment has displayed a total amount display column.
Fig. 11 is a diagram showing an example of a screen on which the tablet terminal according to the second embodiment has displayed a signature column at a position according to the currency kind selection of which has been accepted.
Fig. 12 is a diagram showing another example of a screen on which the tablet terminal according to the second embodiment has displayed a signature column at a position according to the currency kind selection of which has been accepted.
Fig. 13 is a flow chart showing an example of a flow of a processing which the settlement system according to the second embodiment executes.

### DETAILED DESCRIPTION

According to one embodiment, a settlement terminal device settles a total amount, based on a prescribed currency, of purchased articles of a customer. The settlement terminal device has a communication interface, a display, and a controller. The communication interface inputs a currency kind capable of performing settlement of the total amount based on the prescribed currency. The display displays information relating to the settlement and accepts an operation of the customer. The controller acquires a total amount for each the currency kind in which the total amount based on the prescribed currency is exchanged into each the inputted currency kind capable of performing settlement. The controller makes the display comparably display the acquired total amount for each the currency kind, along with the inputted currency kind capable of performing settlement. The controller accepts selection of a currency kind for performing settlement by the customer, from the displayed currency kinds capable of performing settlement, via the display. The controller makes the display display a signature column for inputting a signature of the customer on the same screen as a screen on which the acquired total amount for each the currency kind, and accepts an input of the signature to the signature column by the customer via the display. The controller performs settlement in the currency kind the selection of which has been accepted.

Hereinafter, embodiments will be described with reference to the drawings. In the drawings, the same symbols indicate the same or the similar portions.

### (First embodiment)

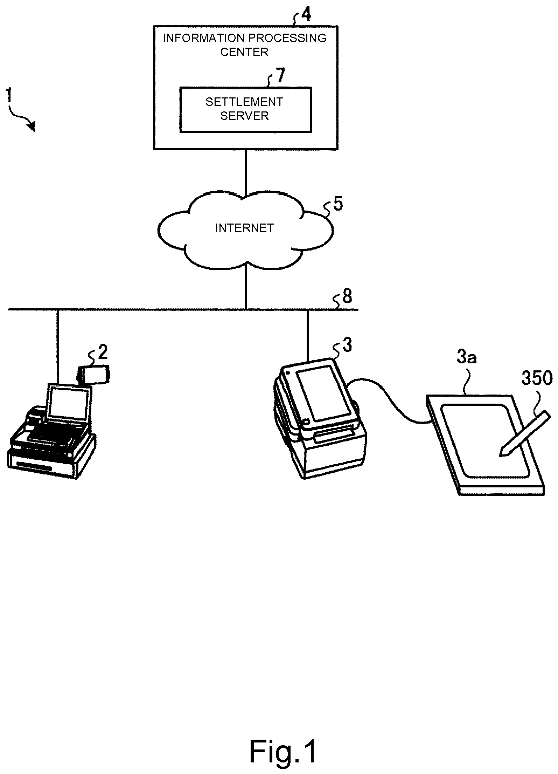

A settlement terminal device according to a first embodiment will be described using the drawings. Fig. 1 is a block diagram showing a schematic configuration of a settlement system 1. The settlement system 1 has a POS (Point Of Sale) terminal 2, a settlement terminal 3, a tablet terminal 3a, a settlement server 7 to be provided in an information processing center 4 of a credit company and so on. The POS terminal 2 and the settlement terminal 3 are provided in a store of a retail store. The POS terminal 2 and the settlement terminal 3 are connected via a LAN (Local Area Network) 8 that is an example of a network. In addition, the settlement terminal 3 is connected to the settlement server 7 via a network such as Internet 5 or the like. In addition, the settlement terminal 3 and the tablet terminal 3a are connected by a USB (Universal Serial Bus) or the like. In addition, the settlement terminal 3 including the tablet terminal 3a is an example of the settlement terminal device.

Here, in Fig. 1, the POS terminal 2 and the settlement terminal 3 are shown respectively by ones, but each of the numbers of the POS terminals 2 and the settlement terminals 3 is not limited to one. That is, a plurality of the POS terminals 2 and a plurality of the settlement terminals 3 may be connected to the LAN 8.

The POS terminal 2 registers, as sales, a price which the retail store receives (has received) from a customer as a consideration of a commodity such as an article and a service with which the retail store provides (has provided) the customer. In addition, in the present embodiment, a salesclerk of the retail store shall perform an operation of the POS terminal 2.

At the time of performing sales registration like this, generally, the POS terminal 2 firstly acquires a commodity code which can uniquely identify a commodity that becomes (has become) a buying/selling target in the relevant buying/selling transaction. When the commodity to become the buying/selling target is an article, the acquisition of the commodity code is performed by optically reading a symbol mark such as a bar code individually attached to the relevant article, for example. Since the symbol mark such as the bar code is obtained by coding a commodity code, the read data is decoded, and thereby the commodity code can be acquired. When the commodity to become the buying/selling target is a service, the acquisition of the commodity code is performed based on detection of an operation to a key (button) or the like assigned with a commodity code of each service.

The POS terminal 2 which has acquired the commodity code reads out commodity information such as a commodity name and a price associated with the relevant commodity code from a commodity master not shown. And the POS terminal 2 acquires the read commodity information, as one relating to the commodity to be identified by the commodity code with which the relevant commodity information has been associated. The POS terminal 2 which has acquired the commodity information temporarily stores the relevant commodity information in a prescribed work area in a memory. The work area stores the respective commodity information of the whole commodities which are to be bought and sold in one transaction for each the commodity. In addition, the POS terminal 2 displays the commodity name and the price included in the acquired commodity information for each the commodity on a display.

After having acquired the commodity information of the whole commodities which are (have been) bought and sold in one transaction, the POS terminal 2 displays a total amount of the prices (payment amount of the customer) in the relevant transaction on the display. Display of the total amount of the prices is performed based on detection of an operation to a prescribed key (button) such as a subtotal key. In addition, the total amount of the prices is calculated based on the commodity information stored in the work area, for example. The total amount of the prices (settlement amount) to be calculated here is a money amount in a prescribed currency, that is, a currency (Japanese Yen, for example) on the spot where the customer has purchased the commodity.

When the salesclerk accepts an offer of payment in cash from the customer who has confirmed the total amount of the prices, the salesclerk key-inputs the total amount received from the customer in cash in the POS terminal 2, as a deposit amount. When having detected the above-described key-input of the deposit amount, the POS terminal 2 executes a settlement processing by cash payment. As an example of the settlement processing by cash payment, the POS terminal 2 opens a drawer housing cash. For example, the salesclerk houses the cash received from the customer in the drawer, and takes out cash corresponding to change from the drawer, when change is necessary. In addition, the POS terminal 2 adds the total amount of the prices in the relevant transaction in a storage area in a memory which stores the total amount of the cash payment transaction, to perform accumulation.

In addition, when the salesclerk accepts an offer of payment by credit from the customer who has confirmed the total amount of the prices, the salesclerk performs an operation to instruct a settlement processing by credit payment to the POS terminal 2, so as to perform settlement by the settlement terminal 3. The POS terminal 2 generates the payment amount (the above-described total amount of the prices) as the settlement amount (amount to be settled), and transmits information of the generated settlement amount (the above-described total amount of the prices) to the settlement terminal 3 via the LAN 8. And when receiving a notification that the settlement by credit has been executed normally and without any problems from the settlement terminal 3, the POS terminal 2 adds the total amount of the prices in the relevant transaction in a storage area in a memory which stores the total amount of the credit payment transaction, to perform accumulation.

In addition, in the settlement processing, the POS terminal 2, regardless of the payment kind (payment in cash and payment by credit), adds each transaction commodity information for each commodity which has been bought and sold in each transaction, such as a transaction amount, the number of transaction pieces, for each commodity as sales of each commodity, to perform accumulation, in a storage area in a memory, to perform accumulation. In addition, the POS terminal 2, for each transaction, prints detailed information of the transaction commodities such as a name of each commodity which has been bought and sold in the relevant transaction, a sales amount, the number of sales, on a slip sheet, along with transaction amount information such as the total amount of the commodity prices in the relevant transaction, and issues the slip. In addition, the POS terminal 2 adds the transaction amount of each transaction to a storage area in a memory for each payment kind (may be called transaction kind), to perform accumulation.

The settlement terminal 3 is a device to settle the above-described total amount of the prices calculated by the POS terminal 2. When the customer performs settlement by credit, the settlement terminal 3 reads card information from a credit card such as an IC card and a magnetic card which the customer holds. The settlement terminal 3 transmits the read card information and the above-described settlement amount (the above-described total amount of the prices) and so on to the information processing center 4, to ask the information processing center 4 whether the settlement by credit is available. In addition, in the present embodiment, in the case of performing settlement by credit, the settlement terminal 3 asks the settlement server 7 of the information processing center 4 about a currency kind (kind of currency) capable of performing settlement and an exchange rate for each the currency kind, and so on.

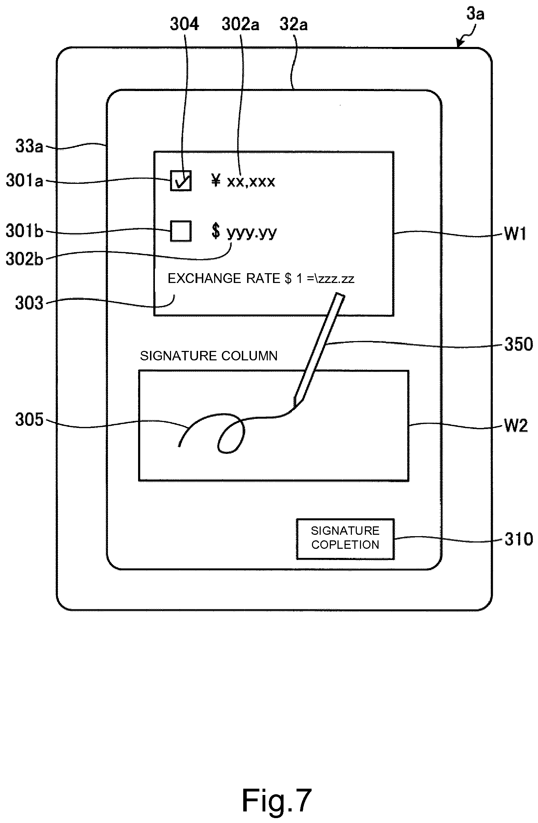

The tablet terminal 3a has a liquid crystal panel 32a on the surface. A touch panel 33a is laminated on the liquid crystal panel 32a (refer to Fig. 7). Various display information generated by the settlement terminal 3 is displayed on the liquid crystal panel 32a. The touch panel 33a detects a contact position of a stylus pen 350. The detected contact position is transmitted to the settlement terminal 3. The settlement terminal 3 executes a processing in accordance with the above-described contact position.

The settlement server 7 responds to an inquiry relating to the settlement by credit from the settlement terminal 3. Specifically, the settlement server 7 judges whether the settlement by credit is available from the settlement amount (total amount of the prices) transmitted from the settlement terminal 3 and the credit balance, and transmits settlement information to the settlement server 3 if the settlement is available. In addition, in the present embodiment, the settlement server 7 transmits the currency kind (kind of currency) capable of settling the settlement amount transmitted from the settlement terminal 3 and the exchange rate for each the currency kind, and so on, to the settlement terminal 3.

### (Description of hardware configuration of POS terminal)

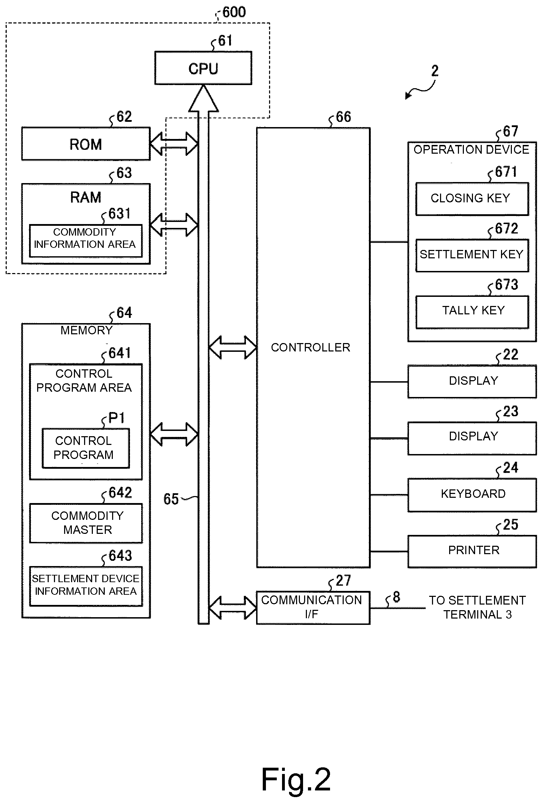

Next, the POS terminal 2 will be described using Fig. 2. Fig. 2 is a hardware block diagram showing a hardware configuration of the POS terminal 2. As shown in Fig. 2, the POS terminal 2 has a controller 600. The controller 600 includes a CPU (Central Processing Unit) 61, a ROM (Read Only Memory) 62, and a RAM (Random Access Memory) 63. The CPU 61 is a control main body of the POS terminal 2. The ROM (Read Only Memory) 62 stores various programs. The RAM (Random Access Memory) 63 functions as a work area of the CPU 61. In addition, the POS terminal 2 has a memory 64, such as an HDD (Hard Disc Drive) or a flash memory, to store various programs. The CPU 61, the ROM 62, the RAM 63, the memory 64 are connected to each other via an internal bus 65. That is, the POS terminal 2 has a configuration of a common computer.

The CPU 61 develops a control program P1 stored in a control program area 641 of the memory 64 into the RAM 63 to operate the control program P1, and thereby the controller 600 executes a control processing described later.

In addition, the RAM 63 has a commodity information area 631. The commodity information area 631 stores the commodity information of the commodity of which the POS terminal 2 has performed sales registration.

The memory 64 has a control program area 641, a commodity master 642, and a settlement device information area 643. The control program area 641 stores the control program P1 to control the POS terminal 2. The commodity master 642 stores the commodity information for each the commodity code to identify the commodity. The settlement device information area 643 stores information of the settlement terminal 3. The information of the settlement terminal 3 is an IP address for identifying the settlement terminal 3, a port number provided for a settlement processing, a port number provided for a tally processing, and so on.

The controller 600 is connected to an operation device 67 having a closing key 671, a settlement key 672, a tally key 673, via the internal bus 65 and a controller 66. The closing key 671 accepts an operation of a salesclerk for instructing execution of the settlement processing of the transaction. The settlement key 672 accepts an operation of the salesclerk for instructing transmission of the settlement information to the settlement terminal 3. The tally key 673 accepts an operation of the salesclerk for instructing collection of tally information from the settlement terminal 3.

The controller 600 connects to a display 22 for a salesclerk, a display 23 for a customer, a keyboard 24, and a printer 25, via the internal bus 65 and the controller 66. Each of the displays 22, 23 is formed of an LCD (Liquid Crystal Display) panel, for example, and a touch panel is laminated on the surface. Each of the displays 22, 23 displays the commodity name, a money amount of the commodity, a total amount of one transaction, and so on. In addition, each of the displays 22, 23 receives an input of operation information of the salesclerk and the customer, and outputs an operation signal corresponding to the operation information. In addition, the controller 600 connects to a communication I/F (Interface) 27 via the internal bus 65. The communication I/F 27 connects to the settlement terminal 3 via the LAN 8. The communication I/F 27 transmits (outputs) the above-described calculated total amount (total amount in Japanese Yen) of the prices to the settlement terminal 3, as the settlement amount.

### (Description of hardware configuration of settlement terminal)

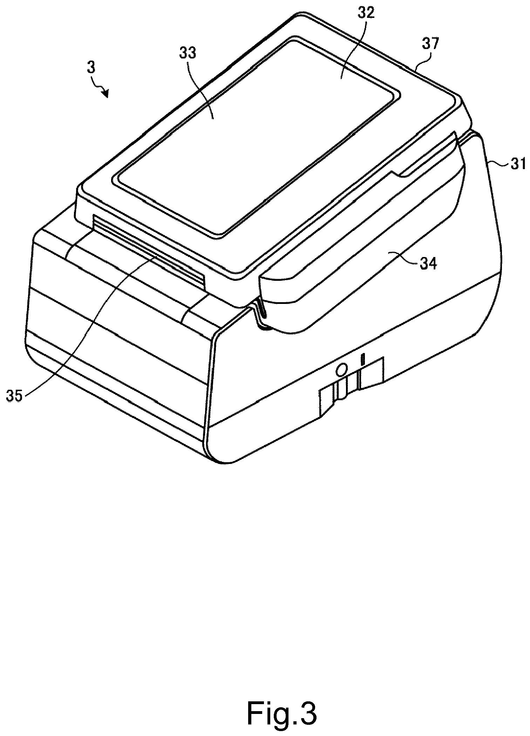

Next, the settlement terminal 3 will be described using Fig. 3. Fig. 3 is a perspective view of an outer appearance of the settlement terminal 3. As shown in Fig. 3, an upper surface panel 37 which is openable and closable to a main body 31 is provided at an upper portion of the main body 31 of the settlement terminal 3. The upper surface panel 37 is opened, and thereby a roll shape slip sheet can be set inside the main body 31. In addition, a liquid crystal panel 32 that is a display is installed on the surface of the upper surface panel 37. A touch panel 33 is installed on the front surface of the liquid crystal panel 32.

A card reader 34 to magnetically read, from a card for settlement, information stored in the relevant card is provided at an upper portion of the side surface of the main body 31. As the card for settlement, a credit card can be used, for example. In addition, the card reader 34 may come in electrically contact with an IC chip incorporated in the inserted card to electrically read the information stored in the card (IC chip).

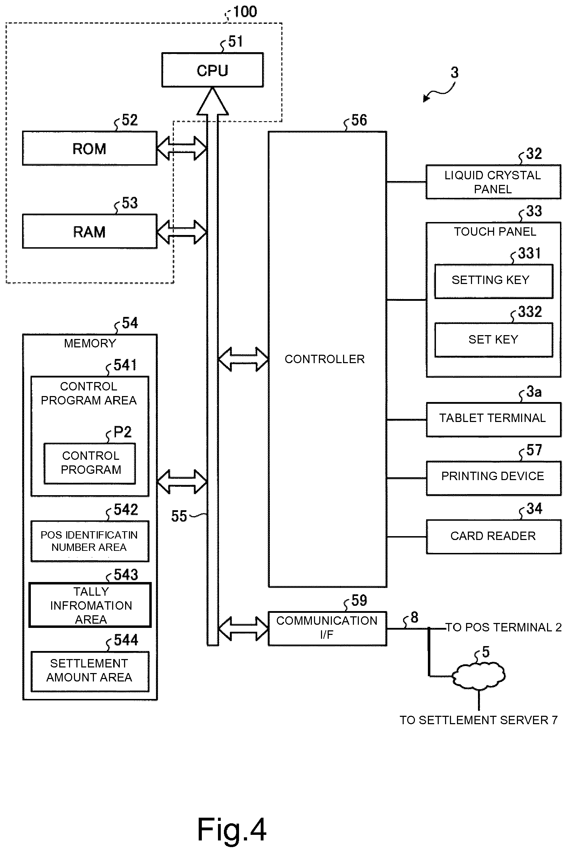

A printing device 57 (refer to Fig. 4) to print the tally information and so on relating to settlement on the above-described roll shape slip sheet is provided inside the main body 31. A slip after printing is issued from an issue port 35 provided between the main body 31 and the upper surface panel 37.

Fig. 4 is a block diagram showing a hardware configuration of the settlement terminal 3. As shown in Fig. 4, the settlement terminal 3 has a controller 100 for controlling respective portions. The controller 100 includes a CPU 51, a ROM 52, and a RAM 53.

The CPU 61 controls the respective portions concentrically. The CPU 51 connects to the ROM 52 and the RAM 53 via an internal bus 55. In addition, a memory 54 and an input/output (I/O) device controller 56 are connected to the controller 100 via the internal bus 55. That is, the settlement terminal 3 has a configuration of a common computer. And, the CPU 51 develops a control program P2 stored in a control program area 541 of the memory 54 into the RAM 53 to operate the control program P2, and thereby the controller 100 executes a control processing described later.

The memory 54 is a nonvolatile memory, such as a flash memory, in which storage information is held even when a power source is turned off. The memory 54 includes the control program area 541, a POS identification number area 542, a tally information area 543, and a settlement amount area 544. The control program area 541 stores the control program P2 for controlling the settlement terminal 3. The POS identification number area 542 stores a register number (identification information) for identifying the POS terminal 2 to collect the tally information from the settlement terminal 3. That is, the POS terminal 2 register number of which has been stored in the POS identification number area 542 collects the tally information from the settlement terminal 3.

The tally information area 543 stores the settlement information relating to the settlement by credit. That is, when the settlement by credit is performed, the settlement information including the settlement amount relating to the settlement processing is stored in the tally information area 543. In addition, the settlement amount area 544 stores the settlement amount relating to the settlement processing.

The I/O device controller 56 connects to the liquid crystal panel 32, the touch panel 33, the tablet terminal 3a and so on. The I/O device controller 56 executes various controls based on an instruction from the controller 100. The liquid crystal panel 32 displays various information including an image of a key. The touch panel 33 is provided on the front surface of the liquid crystal panel 32. The touch panel 33 detects a touch operation to positions corresponding to various keys such as numeric keys for inputting numeric values, for example, which have been displayed on the liquid crystal panel 32, to accept an operation to instruct execution of functions of the various keys. The touch panel 33 has a setting key 331 and a set key 332. The setting key 331 and the set key 332 provided in the touch panel 33 of the settlement terminal 3 accept an operation of a salesclerk, and thereby the above-described register number for identifying the POS terminal 2 is set in the POS identification number area 542.

Specifically, when the setting key 331 accepts an operation of the salesclerk, the crystal display panel 32 displays an input screen for inputting the register number. The input screen accepts a touch operation for inputting the register number by the salesclerk. That is, the salesclerk inputs the register number in the input screen. After the above-described input screen has been displayed, when the set key 332 accepts an operation of the salesclerk, the liquid crystal panel 32 displays a confirmation screen. In the confirmation screen, the register number inputted via the above-described input screen is displayed. When the confirmation screen is displayed, the set key 332 accepts an operation of the salesclerk again, the POS identification number area 542 stores the register number inputted via the above-described input screen. In this manner, the register number that is the above-described identification number is stored in the settlement terminal 3.

The controller 100 connects to the tablet terminal 3a via the internal bus 55 and the I/O device controller 56. The controller 100 makes the tablet terminal 3a display the total amount for each the currency kind, a check column for selecting the currency kind, a signature column, and so on. In addition, the controller 100 receives operation information to the tablet terminal 3a, and executes a processing in accordance with the operation contents. The operation contents of the tablet terminal 3a will be described in detail later.

The controller 100 connects to the printing device 57 and the card reader 34, via the internal bus 55 and the controller 56. The printing device 57 draws out a tip of the roll shape slip sheet housed inside the main body 31, and prints the tally information and so on relating to the settlement on the slip sheet using a thermal head, for example, and issues the slip. The card reader 34 reads card information magnetically or electrically stored in the card of the credit card which the customer holds.

In addition, the controller 100 connects to a communication I/F 59 via the internal bus 55. The communication I/F 59 connects to the POS terminal 2 via the LAN 8. The communication I/F 59 inputs the above-described total amount (total amount in Japanese Yen) of the prices, as the settlement amount. In addition, the communication I/F 59 connects to the settlement server 7 via the LAN 8 and the Internet 5. The communication I/F 59 receives (inputs) information of the customer including at least the currency kind capable of performing settlement and the exchange rate for each the currency kind from the settlement server 7. In addition, the communication I/F 59 inputs the settlement information indicating that the settlement by credit has been normally performed from the settlement server 7.

### (Description of hardware configuration of settlement server)

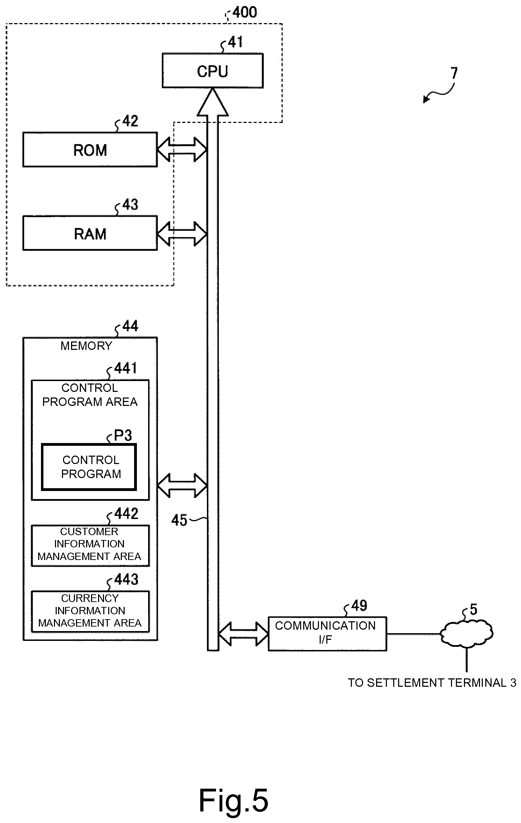

Next, the settlement server 7 will be described using Fig. 5. Fig. 5 is a block diagram showing a hardware configuration of the settlement server 7. As shown in Fig. 5, the settlement server 7 has a controller 400. The controller 400 includes a CPU 41, a ROM 42 and a RAM 43. The CPU 41 is a control main body of the settlement server 7. The CPU 41 controls respective portions of the settlement server 7 concentrically. The CPU 41 connects to the ROM 42 and the RAM 43 via an internal bus 45. That is, the settlement sever 7 has a configuration of a common computer. In addition, the CPU 41 is connected to a memory 44 via the internal bus 45. The CPU 41 develops a control program P3 stored in a control program area 441 of the memory 44 into the RAM 43 to operate the control program P3, and thereby the controller 400 executes a control processing described later.

The memory 44 is a nonvolatile memory, such as a flash memory, in which storage information is held even when a power source is turned off. The memory 44 includes the control program area 441, a customer information management area 442, and a currency information management area 443. The control program area 441 stores the control program P3 for controlling the settlement server 7. The customer information management area 442 stores and manages credit card information of the customer. The credit card information includes various registration information indicating an attribute of the customer, signature information including signature data of the customer, a credit card use history of the customer, a usable (capable of performing settlement) currency kind, and so on. The currency information management area 443 stores the newest exchange rate information and so on.

In addition, the controller 400 connects to a communication I/F 49 via the internal bus 45. The communication I/F 49 connects to the settlement terminal 3 via the Internet 5. The communication I/F 49 transmits (outputs) the information of the customer including the currency kind capable of performing settlement and the exchange rate and so on to the settlement terminal 3.

### (Description of functional configuration of settlement server)

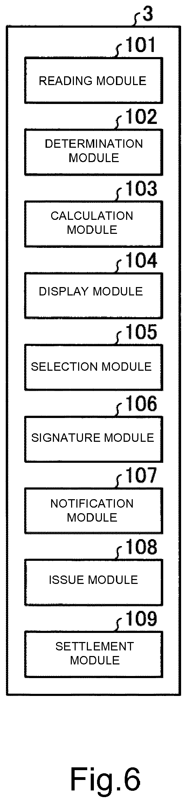

Next, a functional configuration of the settlement terminal 3 will be described using Fig. 6. As shown in Fig. 6, the controller 100 of the settlement terminal 3 cooperates with the POS terminal 2 and the settlement server 7, in accordance with program such as the control program 2 stored in the memory 54, to function as a reading module 101, a determination module 102, a calculation module 103, a display module 104, a selection module 105, a signature module 106, a notification module 107, an issue module 108, a settlement module 109.

The reading module 101 reads the credit card information of the customer using the card reader 34.

The determination module 102 determines whether DCC is available, based on the credit card information of the customer which the reading module has read.

Specifically, the determination module 102 transmits an inquiry about whether DCC is available, along with the above-described read credit card information of the customer and the above-described settlement amount (the above-described total amount of the prices), to the settlement server 7 via the communication I/F 59, for example. The determination module 102 receives a response to the above-described inquiry from the settlement server 7 via the communication I/F 59. The response from the settlement server 7 includes whether or not settlement of the settlement amount is possible, whether or not the credit card is valid, whether or not DCC is available, the currency kind capable of performing settlement, the exchange rate for each the currency kind, and so on, for example. The determination module 102 determines whether DCC is available, and so on, based on the above-described response from the settlement server 7.

In addition, the DCC is a service which is assumed to be used by a foreigner who performs settlement by credit. For example, a case in which an American performs settlement by credit in Japan is assumed. The relevant American shall hold a credit card issued in America. In this case, the American can receive settlement in "U.S. dollar" that is the domestic currency, and can also receive settlement in "Japanese Yen" that is the currency on the spot where the commodity is purchased. That is, the DCC means that settlement is available in a plurality of currency kinds including a prescribed currency that is the currency on the spot where the commodity is purchased. In addition, it is necessary for the customer of the credit card to previously register the usable currency kind (currency kind capable of performing settlement) to the credit card company, in order to receive DCC service. The customer uses the DCC service like this, and thereby can select a more profitable currency, in consideration of the exchange rate between Japanese Yen and U.S. dollar, and can receive settlement in the selected currency. For example, an American customer can receive settlement in "U.S. dollar" when the yen is weak, and can receive settlement by "Japanese Yen" when the yen is strong, and thereby can suppress the payment amount low.

The calculation module 103 acquires the total amount for each the currency kind in which the total amount (Japanese Yen) of the prices of the purchased articles of the customer to be displayed in a total amount display column W1 (refer to Fig. 7) is exchanged into each the currency kind capable of performing settlement (Japanese Yen and U.S. Dollar, for example), provided that the determination module 102 has determined that DCC is available. Specifically, the calculation module 103 acquires the total amount for each the currency kind by exchanging the total amount (Japanese Yen) of the prices of the purchased articles of the customer into the currency kind capable of performing settlement, based on the exchange rate. In addition, the calculation module 103 may acquire the total amount for each the currency kind in which the total amount of the prices of the purchased articles of the customer is exchanged into each the currency kind capable of performing settlement by the settlement server 7, from the settlement server 7. In addition, the calculation module 103 is an example of calculation means.

The display module 104 makes the liquid crystal panel 32a of the tablet terminal 3a to be connected to the settlement terminal 3 display the total amount display column W1, check columns 301a, 301b (refer to Fig. 7), and so on. In addition, the display module 104 displays the total amount for each the currency kind calculated by the calculation module 103 in the total amount display column W1, and thereby makes the liquid crystal panel 32a of the tablet terminal 3a comparably display the total amount for each the currency kind. In addition, the display module 104 is an example of display means.

The selection module 105 makes the customer select the currency kind for performing settlement by the customer, from the currency kinds capable of performing settlement which the display module 104 has made the liquid crystal panel 32a of the tablet terminal 3a display. Specifically, the selection module 105 detects contact of the stylus pen 350 of the customer to the check column 301a or 301b displayed by the display module 104 via the touch panel 33a, to accept selection of the currency kind for performing settlement. In addition, the selection module 105 is an example of selection means.

The signature module 106 makes the liquid crystal panel 32a of the tablet terminal 3a display a signature column W2 (refer to Fig. 7) for making the customer input signature on the same screen as the displayed total amounts for each the currency kind capable of performing settlement. In addition, the signature module 106 validates the input of the signature in the signature column W2 by the customer, provided that the selection of the currency kind for performing settlement has been accepted by the selection module 105. And the signature module 106 reads the signature which the customer has inputted in the signature column W2. In addition, the signature module 106 determines whether the signature has been completed. When determining that the signature has been completed, the signature module 106 accepts an input of the signature by the customer. In addition, the signature module 106 is an example of signature means.

When the signature module 106 detects that an input of the signature is performed, in the state in which selection of the currency kind for performing settlement has not been accepted by the selection module 105, the notification module 107 informs the customer so as to select the currency kind before inputting the signature. By this means, the settlement terminal 3 does not accept an input of the signature until the selection of the currency kind is accepted by the selection module 105.

The issue module 108 issues the slip printed with the contents of the transaction, provided that the selection of the currency kind for performing settlement by the customer has been accepted by the selection module 105, or the input of the signature by the customer has been accepted by the signature module 106. In addition, the issue module 108 is an example of issue means.

The settlement module 109 performs settlement in the currency kind selection of which has been accepted by the selection module 105. Specifically, the settlement module 109 transmits the currency kind the selection of which has been accepted to the settlement server 7 via the communication I/F 59 to make the settlement server 7 perform settlement. The settlement module 109 receives the notification indicating that the settlement has been performed correctly from the settlement server 7 via the communication I/F 59. In addition, the settlement module 109 is an example of settlement means.

### (Description of display example of tablet terminal)

Next, a screen to be displayed on the liquid crystal panel 32a of the tablet terminal 3a when the customer performs selection of the currency kind will be described using Fig. 7. Fig. 7 is a diagram showing an example of a screen which the settlement terminal 3 (display module 104) makes the liquid crystal panel 32a of the tablet terminal 3a display, when the customer performs the selection of the currency kind.

As shown in Fig. 7, the tablet terminal 3a makes the liquid crystal panel 32a display the total amount display column W1, the signature column W2, a signature completion button 310.

Total amounts (a total amount 302a in Japanese Yen and a total amount 302b in U.S. dollar, for example), the check columns 301a, 301b, an exchange rate 303 are displayed in the total amount display column W1.

The total amount is a total amount for each the currency kind capable of performing settlement. The check columns 301a, 301b are each a rectangular shape area, for example, to be displayed at the head of the total amount for each the currency kind. In addition, when selecting the currency kind for performing settlement, the customer makes the stylus pen 350 contact with the check column 301a or 301b to select the relevant currency kind by an action of the touch panel 33a. For example, when selecting settlement on a yen basis, the customer makes the stylus pen 350 contact with the check column 301a. When it is selected to perform settlement on a yen basis, a check mark 304 is displayed in the check column 301a.

The exchange rate 303 is an exchange rate between the currency kinds capable of performing settlement. In the example of Fig. 7, an exchange rate between "U.S. dollar" and "Japanese Yen" that are the currency kinds capable of performing settlement is displayed.

The signature column W2 is a column in which the customer performs a signature 305. An input of the signature 305 is performed by moving the stylus pen 350 in the state in which the stylus pen 350 is in contact with the touch panel 33a by the customer, as shown in Fig. 7.

The signature completion button 310 is a button which is to be pushed down with the stylus pen 350 by the customer when the signature is completed. It is detected by the touch panel 33a that the signature completion button has been pushed down, and is notified to the CPU 51 (signature module 106) of the controller 100. And, receiving the detection of that the signature completion button 310 has been pushed down, the CPU 51 (signature module 106) of the controller 100 judges that the signature has been completed. When the signature is completed, the CPU 51 stores the signature 305 inputted in the signature column W2 in the customer information management area 442 (refer to Fig. 5) in association with the credit card number of the customer, as image data.

### (Description of slip which settlement terminal issues)

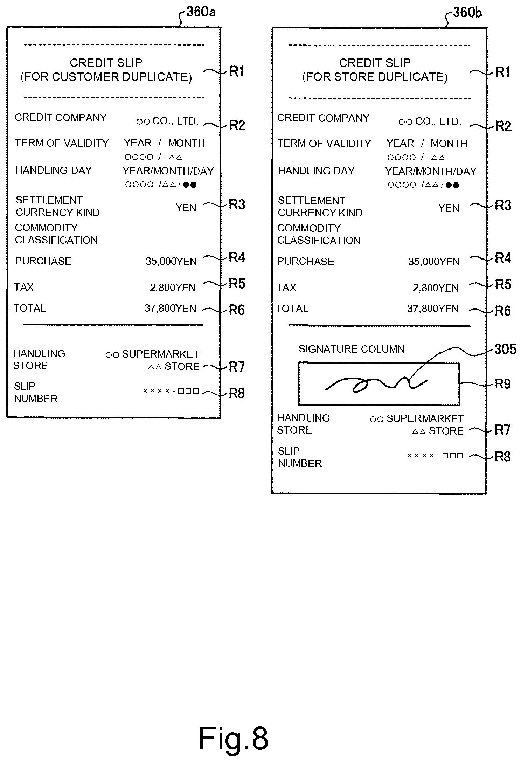

Next, slips which the settlement terminal 3 issues when the settlement is completed will be described using Fig. 8. Fig. 8 is a diagram showing an example of slips which the settlement terminal 3 issues when the settlement is completed.

As shown in Fig. 8, the settlement terminal 3 issues a slip 360a for customer duplicate and a slip 360b for store duplicate. To begin with, printed contents of the slip 360a for customer duplicate will be described.

The slip 360a for customer duplicate includes a name R1 indicating that the slip 360a is a credit slip, a credit company name R2, a currency kind (settlement currency kind) R3 in which the settlement is performed, a total amount (purchase) R4 of the purchased commodities, a tax amount R5 for the total amount, a payment amount R6 including the total amount and the tax amount, a store name R7, a slip number R8 (or credit number) for identifying the slip, and so on. The issued slip 360a for customer duplicate is handed to the customer. The customer stores the relevant slip 360a.

Next, printed contents of the slip 360b for store duplicate will be described. Contents printed on the slip 360b for store duplicate include the whole contents from the credit company name R2 to the slip number R8 to be printed on the slip 360a for customer duplicate. And the slip 360b for store duplicate further includes a signature column R9. The above-described signature 305 (refer to Fig. 7) of the customer is read out from the customer information management area 442 (refer to Fig. 5) and is printed in the signature column R9. The salesclerk stores the issued slip 360b.

### (Description of flow of processing which settlement terminal perform)

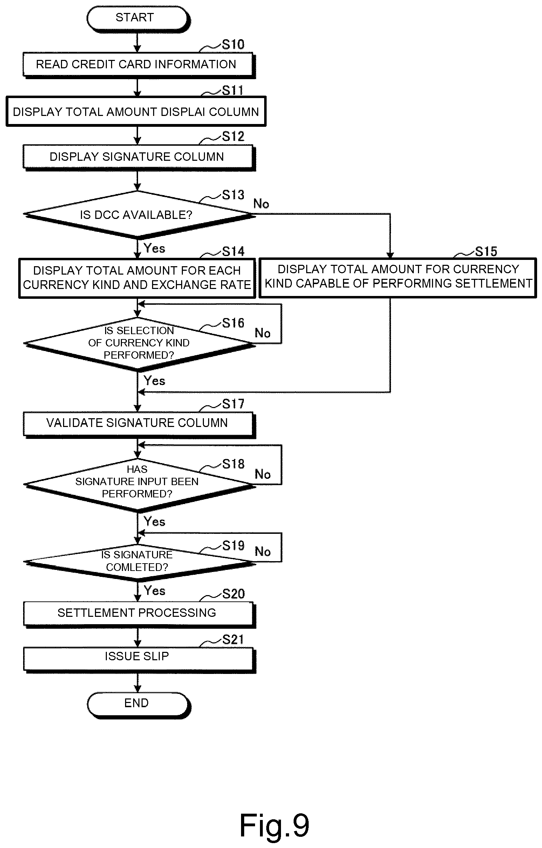

Next, a flow of a processing which the settlement terminal 3 performs will be described using Fig. 9. Fig. 9 is a flow chart showing a flow of a processing which the settlement system 1 of the first embodiment performs.

In a step S10 of Fig. 9, the reading module 101 (refer to Fig. 6) reads the credit card information of the customer.

In a step S11, the display module 104 (refer to Fig. 6) displays the total amount display column W1 on the liquid crystal panel 32a of the tablet terminal 3a.

In a step S12, the signature module 106 displays the signature column W2 on the same screen as the total amount display column W1.

In a step S13, the determination module 102 (refer to Fig. 6) determines whether the relevant credit card is a credit card capable of performing DCC, based on the credit card information read in the step S10. Specifically, the determination module 102 transmits an inquiry about whether the credit card is capable of performing DCC, along with the above-described credit card information and the settlement amount (the above-described total amount of the prices) to the settlement server 7 via the transmission I/F 59. And the determination module 102 determines whether the credit card is a credit card capable of performing DCC, based on the response information to the above-described inquiry from the settlement server 7. When it is determined that the credit card is a credit card capable of performing DCC (Step S13: Yes), the processing of the controller 100 transfers to a step S14. In the step S14, the calculation module 103 exchanges the above-described total amount of the prices into the total amount for each the currency kind capable of performing settlement, based on the currency kind capable of performing settlement and the exchange rate included in the response information from the settlement server 7. Further, the display module 104 displays the above-described currency kinds capable of performing settlement, the above-described total amount for each the currency kind capable of performing settlement, and the exchange rate on the liquid crystal panel 32a of the tablet terminal 3a. Then, the processing of the controller 100 transfers to a step S16.

On the other hand, when it is not determined that the credit card is a credit card capable of performing DCC (Step S13: No), the processing of the controller 100 transfers to a step S15. The display module 104 displays the total amount of the currency kind capable of performing settlement on the liquid crystal panel 32a of the tablet terminal 3a. Then, the processing of the controller 100 transfers to a step S17.

When the currency kinds capable of performing settlement, the total amount for each the currency kind, and the exchange rate are displayed In the step S14, the selection module 105 (refer to Fig. 6) detects whether or not the stylus pen 350 has been contacted with the check column 301a or 301b by the customer, via the touch panel 33a, in the step S16. The selection module 105 detects that the stylus pen 350 has been contacted with the check column 301a or 301b to accept selection of the currency kind for performing settlement. When the selection of the currency kind for performing settlement has been accepted (step S16: Yes), the processing of the controller 100 transfers to a step S17. On the other hand, when the selection of the currency kind for performing settlement has not been accepted (step S16: No), the selection module 105 repeats the processing of the step S16.

When the total amount of the currency kind capable of performing settlement is displayed in the step S15, or the selection of the currency kind for performing settlement is accepted in the step S16 (step S16: Yes), the signature module (refer to Fig. 6) validates the signature column W2 displayed in the step S12, that is, makes the signature column W2 in a state capable of performing signature, in the step S17.

Next, the signature module 106 determines whether signature is inputted (signature is performed) in the signature column W2, in a step S18. When it is determined that the signature has been inputted (signature is performed) in the signature column W2 (step S18: Yes), the processing of the controller 100 transfers to a step S19. On the other hand, when it is not determined that the signature has been inputted (signature is performed) (step S18: No), the signature module 106 repeats the determination of the step S18.

In addition, determination whether the signature has been inputted in the signature column W2 is performed by monitoring an output of the touch panel 33a by the signature module 106 and by recognizing whether the stylus pen 350 is in contact with the inside of the signature column W2.

Subsequently, the signature module 106 determines whether the input of signature (signing) is completed, in the step S19. Specifically, the signature module 106 determines whether the signature completion button 310 (refer to Fig. 7) has been pushed down. When it is determined that the input of signature (signing) has been completed, the signature module 106 accepts the input of signature by the customer. Further, when it is determined that the input of signature (signing) has been completed (step S19: Yes), the processing of the controller 100 transfers to a step S20. On the other hand, when it is not determined that the input of signature (signing) has been completed (step S19: No), the signature module 106 repeats the determination of the step S19.

Next, the settlement module 109 (refer to Fig. 6) performs the settlement processing in the currency kind the selection of which has been accepted by the selection module 105, in the step S20. And, when receiving the notification that the settlement processing has been normally performed from the settlement server 7, in the settlement processing, the settlement module 109 notifies that the settlement by credit has been normally executed to the POS terminal 2. In addition, the issue module 108 (refer to Fig. 6) issues the slip 360a for customer duplicate and the slip 360b for store duplicate, in a step S21. After having issued the slips, the controller 100 finishes a series of the processings of Fig. 9. In addition, issue of the slips may be performed after the processing of Yes determination of the step S16, or after the processing of the step S15, that is, at a time point when the currency kind for performing settlement has been determined. However, in this case, since signature by the customer has not been performed, the signature column R9 of the slip 360a for store duplicate is in blank.

In addition, though not stated in the flow chart of Fig. 9, the controller 100 of the settlement terminal 3 has a function of the notification module 107 (refer to Fig. 6). The notification module 107 informs the customer so as to select the currency kind before inputting the signature, in the state in which the selection of the currency kind for performing settlement is not accepted by the selection module 105, and provided that the signature module 106 has determined that the input of signature is performed. Specifically, the notification module 107 displays "it is necessary to select currency kind before inputting signature" on the liquid crystal panel 32a of the tablet terminal 3a, to perform reminder. In addition, the reminder which the notification module 107 performs is not limited to the screen display, but a speaker is connected to the tablet terminal 3a, and the settlement terminal 3 may output a voice message from the relevant speaker.

### (Second embodiment)

Next, a settlement system 1a according to a second embodiment will be described. In addition, since an outer appearance, a hardware configuration, and a functional configuration of the settlement system 1a are the same as the settlement system 1 described in the first embodiment, the description thereof will be omitted. In addition, the same symbols as the settlement system 1 are used, as symbols given to hardware constituent elements and functional portions of the settlement system 1a, in the drawings.

The settlement system 1a is different from the settlement system 1 in a screen displayed on the liquid crystal panel 32a of the tablet terminal 3a at the time of performing DCC.

### (Description of display example of tablet terminal)

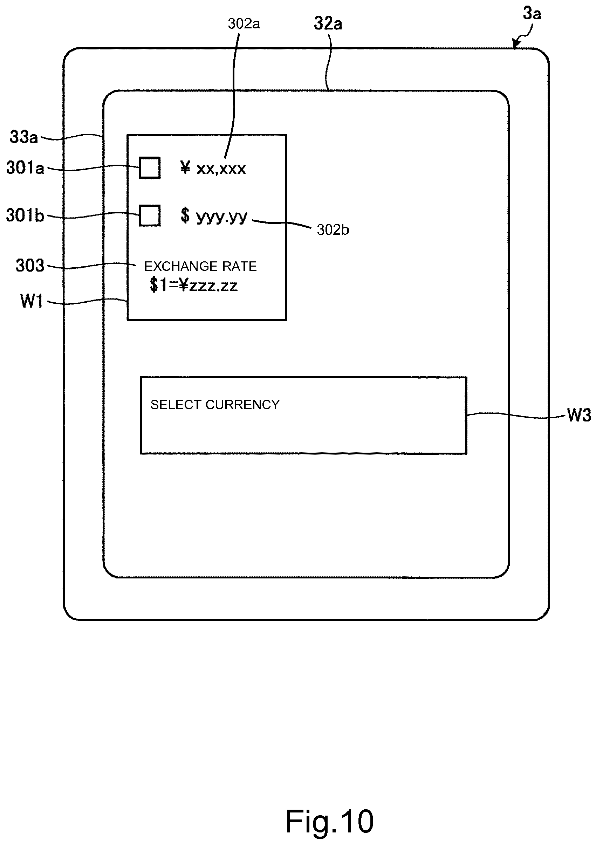

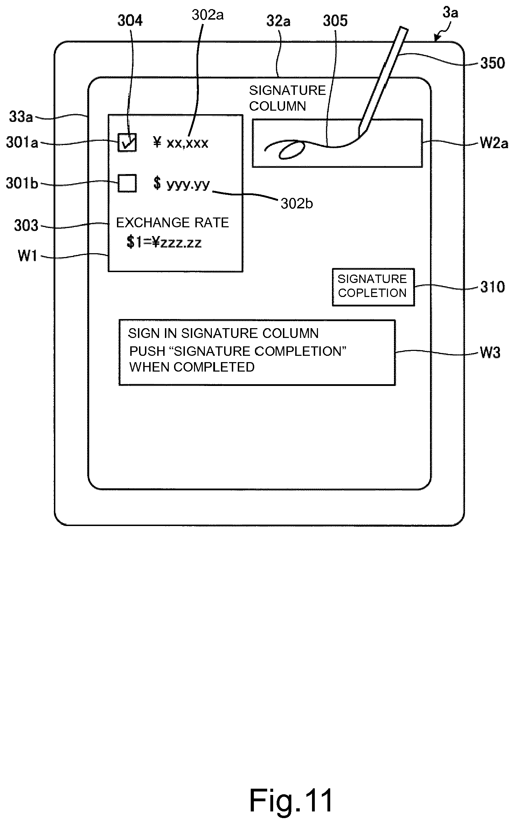

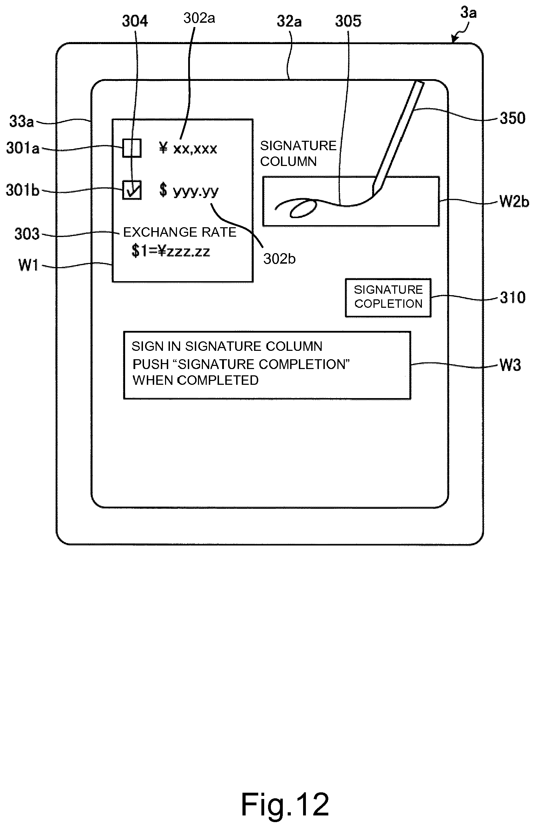

Hereinafter, examples of screens which the settlement terminal 3 included in the settlement system 1a makes the liquid crystal panel 32a of the tablet terminal 3a display will be described using Fig. 10 to Fig. 12. Fig. 10 is a diagram showing an example of a state in which the total amount display column W1 is displayed on the liquid crystal panel 32a of the tablet terminal 3a connected to the settlement terminal 3, in the second embodiment. Fig. 11 is a diagram showing an example of a screen in which a signature column W2a is displayed at a position in accordance with the currency kind selection of which has been accepted, in the second embodiment. And, Fig. 12 is a diagram showing an example of a screen in which a signature column W2b is displayed at a position in accordance with the currency kind selection of which has been accepted, in the second embodiment. In addition, the above-described position in accordance with the currency kind selection of which has been accepted is a position in the vicinity of the above-described display position of the currency kind selection of which has been accepted, as shown in Fig. 11 or Fig. 12, for example.

As shown in Fig. 10, the settlement terminal 3 makes the liquid crystal panel 32a of the tablet terminal 3a display the total amount display column W1 and a message column W3, by the display module 104 (refer to Fig. 6) of the controller 100. The total amounts (the total amount 302a in Japanese Yen and the total amount 302b in U.S. dollar, for example), the check columns 301a, 301b, the exchange rate 303 are displayed in the total amount column W1, as described in the first embodiment. In addition, an operation guide for the customer is displayed in the message column W3. In addition, the touch panel 33a is laminated on the liquid crystal panel 32a, in the same manner as the first embodiment.

Fig. 11 shows a state in which the customer has selected settlement in Japanese Yen. At this time, the signature module 106 (refer to Fig. 6) displays the signature column W2a in the vicinity of the display indicating the total amount 302a in Japanese Yen, in the screen of the liquid crystal panel 32a. In addition, the signature module 106 displays the signature completion button 310 on the liquid display panel 32a.

After having confirmed the total amount 302a in Japanese Yen, the customer inputs the signature 305 in the signature column W2a by the stylus pen 350. The inputted signature 305 is detected by the touch panel 33a. And after having completed the input of the signature 305, the customer pushes down the signature completion button 310 by the stylus pen 350. The settlement terminal 3 of the settlement system 1a completes the settlement in Japanese Yen by a series of the operations.

Fig. 12 shows a state in which the customer has selected settlement in U.S. dollar. At this time, the signature module 106 (refer to Fig. 6) displays the signature column W2b in the vicinity of the display indicating the total amount 302b in U.S. dollar, in the screen of the liquid crystal panel 32a. In addition, the signature module 106 displays the signature completion button 310 on the liquid display panel 32a.

After having confirmed the total amount 302b in U.S. dollar, the customer inputs the signature 305 in the signature column W2b by the stylus pen 350. The inputted signature 305 is detected by the touch panel 33a. And after having completed the input of the signature 305, the customer pushes down the signature completion button 310 by the stylus pen 350. The touch panel 33a detects pushing-down of the signature completion button 310. When the pushing-down of the signature completion button 310 is detected, the settlement system 1a completes the settlement in U.S. dollar.

### (Description of flow of processing which settlement terminal perform)

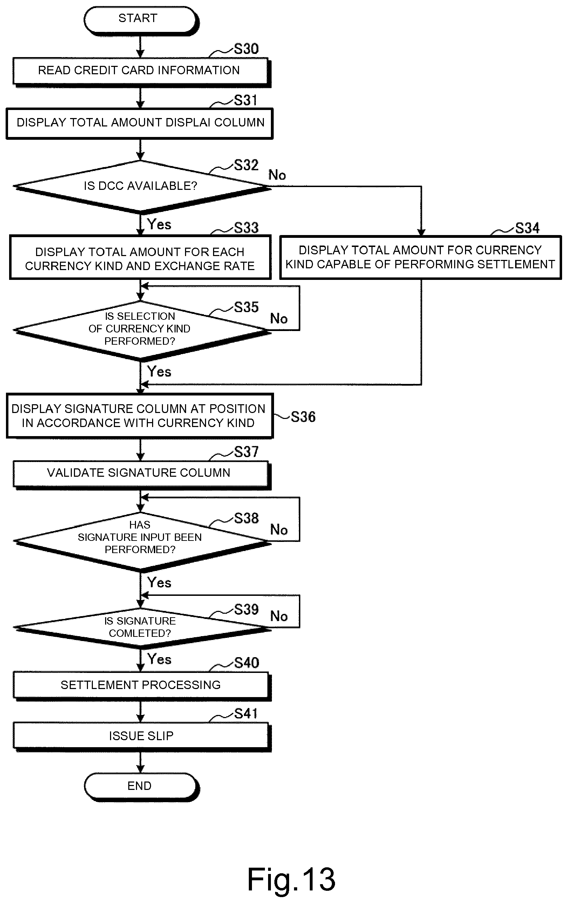

Next, a flow of a processing which the settlement terminal 3 performs will be described using Fig. 13. Fig. 13 is a flow chart showing a flow of a processing which the settlement system 1a of the second embodiment performs.

Processings after the reading module 101 (refer to Fig. 6) reads the credit card information of the customer (step S30) until the display module 104 (refer to Fig. 6) displays the total amount display column W1 on the liquid crystal panel 32a of the tablet terminal 3a (step S31) are the same as the step S10 and the step S11 of the first embodiment (refer to Fog. 9).

In a step S32, the determination module 102 (refer to Fig. 6) determines whether the relevant credit card is a credit card capable of performing DCC, based on the credit card information read in the step S30. When it is determined that the credit card is a credit card capable of performing DCC (step S32: Yes), in a step S33, the display module 104 displays the total amount for each the currency kind capable of performing settlement and the exchange rate on the liquid crystal panel 32a of the tablet terminal 3a. On the other hand, when it is not determined that the credit card is a credit card capable of performing DCC (step S32: No), the display module 104 displays the total amount of the currency kind capable of performing settlement on the liquid crystal panel 32a of the tablet terminal 3a, in a step S34.

Subsequent to the step S33, the selection module 105 (refer to Fig. 6) detects whether or not the stylus pen 350 has been contacted with the check column 301a or 301b by the customer, via the touch panel 33a, in a step S35. The selection module 105 detects that the stylus pen 350 has been contacted with the check column 301a or 301b, and thereby accepts selection of the currency kind for performing settlement. When the selection of the currency kind for performing settlement has been accepted (step S35: Yes), the processing of the controller 100 transfers to a step S36. On the other hand, when the selection of the currency kind for performing settlement has not been accepted (step S35: No), the selection module 105 repeats the processing of the step S35.

Subsequent to the step S34 or Yes determination of the step S35, the signature module 106 (refer to Fig. 6) makes the signature column W2a or W2b to be displayed at a position in accordance with the selected currency kind, in the step S36. Subsequently, the signature module 106 validates the signature column W2a or W2b, that is, makes the signature column W2a or W2b in a state capable of performing signature, in a step S37.

Subsequently, the determination (step S38) whether the signature has been inputted, and the determination (step S39) whether the input of the signature has been completed, both of which the signature module 106 performs, are respectively the same as the step S18 and the step S19 which have been described in the first embodiment.

Next, in a step S40, the settlement module 109 (refer to Fig. 6) performs a settlement processing in the currency kind the selection of which has been accepted by the selection module 105. And, when receiving the notification that the settlement processing has been normally performed from the settlement server 7, in the settlement processing, the settlement module 109 notifies that the settlement by credit has been normally executed to the POS terminal 2. In addition, the issue module 108 (refer to Fig. 6) issues the slip 360a for customer duplicate and the slip 360b for store duplicate, in a step S41. After having issued the slips, the controller 100 finishes a series of the processings of Fig. 13. In addition, issue of the slips may be performed after the Yes determination of the step S35, or after the step S34, that is, at a time point when the currency kind for performing settlement has been determined. However, in this case, since signature by the customer has not been performed, the signature column R9 of the slip 360b for store duplicate is in blank.

As described above, according to the settlement terminal 3 (settlement terminal device) of the first embodiment, the determination module 102 determines whether DCC is available, based on the information of the credit card of the customer which the reading module 101 has read. And provided that the determination module 102 has determined that DCC is available, the calculation module 103 (calculation means) exchanges the total amount of the purchased articles of the customer based on the local currency into each the currency kind capable of performing settlement. The display module 104 (display means) makes the liquid crystal panel 32a of the tablet terminal 3a comparably display the exchanged total amount for each the currency kind, along with the above-described currency kinds capable of performing settlement. The selection module 105 (selection means) accepts selection of the currency kind for performing settlement by the customer, from the above-described currency kinds capable of performing settlement which the display module 104 has displayed. The signature module 106 makes the signature column W2 to be displayed on the same screen as the total amount for each the currency kind which the display module 104 has displayed. The signature module 106 determines whether the signature has been inputted in the above-described signature column W2 by the customer (refer to step S18). When having determined that the above-described signature has been inputted, the signature module 106 further determines whether the input of the signature by the customer has been completed. When having determined that the input of the above-described signature has been completed, the signature module 106 accepts the input of the signature by the customer (refer to step S19). And the settlement module 109 (settlement means) performs settlement in the currency kind selection of which the selection module 105 has accepted. Accordingly, the customer can perform DCC while correctly recognizing the selected currency kind without error at the place in the moment. Further, since it is not necessary to perform exchange of words, such as an operation instruction, between the customer and the salesclerk, it is possible to perform DCC in a short time.

In addition, according to the settlement terminal 3 (settlement terminal device) of the first embodiment, the settlement module 109 (settlement means) performs settlement, provided that acceptance (refer to step S16) of the selection of the currency kind by the selection module 105 (selection means), and the determination (refer to step S19) of the completion of the input of the signature of the customer by the signature module 106 (signature means) have both been completed. Accordingly, it is possible to surely perform settlement in the currency kind which the customer has selected.

Further, according to the settlement terminal 3 (settlement terminal device) of the first embodiment, the input of signature is enabled by the signature module 106 (signature means), provided that the selection of the currency kind for performing settlement has been accepted by the selection module 105 (selection means). Accordingly, since it is not possible to perform signature in the state in which the currency for performing settlement has not been selected, it is possible to prevent that signature is erroneously performed.

In addition, according to the settlement terminal 3 (settlement terminal device) of the first embodiment, the issue module 108 issues the slips printed with contents of the transaction, provided that the selection of the currency kind for performing settlement has been accepted by the selection module 105 (selection means) (refer to step S16), or it has been determined by the signature module 106 (signature means) that the input of the signature of the customer has been completed by the signature module 106 (signature means) (refer to step S19). Accordingly, it is possible to surely issue the slips in the currency kind selected by the customer.

And, according to the settlement terminal 3 (settlement terminal device) of the second embodiment, the signature module 106 (signature means) displays the signature column W2a or W2b at a position in accordance with the currency kind selection of which has been accepted by the selection module 105 (selection means). Accordingly, since the signature column W2a or W2b is displayed in the vicinity of the total amount display column W1, the customer can perform DCC while recognizing the selected currency kind more surely.

In addition, the settlement terminal devices according to the embodiments are not limited to the devices described above. For example, the POS terminal 2 and the settlement terminal 3 are combined to make one POS terminal, and thereby the relevant POS terminal may be made the settlement terminal device.

In addition, the control program P1 which the controller 600 executes may be provided while being previously stored in the memory 64, or may be provided while being recorded in a computer readable recording medium, such as a CD-ROM, a flexible disk (FD), a CD-R, a DVD (Digital Versatile Disk) in a file of an installable format or an executable format. In addition, the control program P1 may be stored on a computer connected to a network, and may be provided by being downloaded through the network. Further, the control program P1 may be provided or distributed via a network such as Internet.

In addition, the control program P2 which the controller 100 executes may be provided while being previously stored in the memory 54, or may be provided while being recorded in a computer readable recording medium, such as a CD-ROM, a flexible disk (FD), a CD-R, a DVD (Digital Versatile Disk) in a file of an installable format or an executable format. In addition, the control program P2 may be stored on a computer connected to a network, and may be provided by being downloaded through the network. Further, the control program P2 may be provided or distributed via a network such as Internet.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A settlement terminal device to settle a total amount, based on a prescribed currency, of purchased articles of a customer, comprising:
a communication interface to input a currency kind capable of performing settlement of the total amount based on the prescribed currency;
a display to display information relating to the settlement and to accept an operation of the customer; and
a controller;
wherein the controller
acquires a total amount for each the currency kind in which the total amount based on the prescribed currency is exchanged into each the inputted currency kind capable of performing settlement,
makes the display comparably display the acquired total amount for each the currency kind, along with the inputted currency kind capable of performing settlement,
accepts selection of a currency kind for performing settlement by the customer, from the displayed currency kinds capable of performing settlement, via the display,
makes the display display a signature column for inputting a signature of the customer on the same screen as a screen on which the acquired total amount for each the currency kind, and accepts an input of the signature to the signature column by the customer via the display, and
performs settlement in the currency kind the selection of which has been accepted.

2. The settlement terminal device according to Claim 1, wherein:
the controller makes the display display the signature column at a position in accordance with the currency kind the selection of which has been accepted.

3. The settlement terminal device according to Claim 2, wherein:
the controller makes the display display the signature column at a position in the vicinity of a display position of the currency kind the selection of which has been accepted.

4. The settlement terminal device according to any one of Claims 1 to 3, wherein:
the controller performs settlement provided that an acceptance of the selection of the currency kind for performing the settlement, and an acceptance of the input of the signature by the customer have been both completed.

5. The settlement terminal device according to Claim 4, wherein:
the controller determines whether the signature has been inputted into the signature column by the customer,
the controller determines that the input of the signature by the customer has been completed when the controller determines that the signature has been inputted, and
the controller accepts the input of the signature by the customer when the controller determines that the input of the signature has been completed.

6. The settlement terminal device according to any one of Claims 1 to 5, wherein:
the controller enables the input of the signature to the signature column by the customer, provided that the selection of the currency kind for performing settlement has been accepted.

7. The settlement terminal device according to Claim 6, wherein:
the controller determines whether the signature has been inputted into the signature column by the customer,
the controller determines whether the input of the signature by the customer has been completed, when the controller determines that the signature has been inputted in a state in which the selection of the currency kind for performing settlement has been accepted, and
the controller notifies the customer to perform the selection of the currency kind for performing settlement before the input of the signature, when the controller determines that the signature has been inputted in a state in which the selection of the currency kind for performing settlement has not been accepted.

8. The settlement terminal device according to any one of Claims 1 to 7, further comprising:
a printing device to issue a slip printed with transaction contents of the purchased articles;
wherein the controller makes the printing device issue the slip printed with the transaction contents, provided that the selection of the currency kind for performing settlement has been accepted, or the input of the signature by the customer has been accepted.

9. The settlement terminal device according to any one of Claims 1 to 8, wherein:
the communication interface inputs information of the customer including the currency kind capable of performing settlement;
the controller determines whether settlement in a plurality of currency kinds including the prescribed currency is available, based on the inputted information of the customer; and
the controller acquires a total amount for each the currency kind in which the total amount based on the prescribed currency is exchanged into each the currency kind capable of performing settlement included in the information of the customer, when the controller determines that the settlement by the plurality of the currency kinds is available.

10. A control method of a settlement terminal device which settles a total amount, based on a prescribed currency, of purchased articles of a customer, and has a communication interface to input a currency kind capable of performing settlement of the total amount and a display to display information relating to the settlement and to accept an operation of the customer, comprising:
acquiring a total amount for each the currency kind in which the total amount based on the prescribed currency is exchanged into each the inputted currency kind capable of performing settlement;
making the display comparably display the acquired total amount for each the currency kind, along with the inputted currency kind capable of performing settlement;
accepting selection of a currency kind for performing settlement by the customer, from the displayed currency kinds capable of performing settlement, via the display;
making the display display a signature column for inputting a signature of the customer on the same screen as a screen on which the acquired total amount for each the currency kind, and accepting an input of the signature to the signature column by the customer via the display; and
performing settlement in the currency kind the selection of which has been accepted.

11. The control method according to Claim 10, further comprising:
making the display display the signature column at a position in accordance with the currency kind the selection of which has been accepted.

12. The control method according to Claim 11, further comprising:
making the display display the signature column at a position in the vicinity of a display position of the currency kind the selection of which has been accepted.

13. The control method according to any one of Claims 10 to 12, further comprising:
performing settlement provided that an acceptance of the selection of the currency kind for performing the settlement, and an acceptance of the input of the signature by the customer have been both completed.

14. The control method according to Claim 13, further comprising:
determining whether the signature has been inputted into the signature column by the customer,
determining that the input of the signature by the customer has been completed when the controller determines that the signature has been inputted, and
accepting the input of the signature by the customer when the controller determines that the input of the signature has been completed.

15. The control method according to any one of Claims 10 to 14, further comprising:
enabling the input of the signature to the signature column by the customer, provided that the selection of the currency kind for performing settlement has been accepted.
